Europäisches Patentamt

European Patent Office

Office européen des brevets

(19)

(11) **EP 1 254 333 B1**

(12) **EUROPEAN PATENT SPECIFICATION**

(45) Date of publication and mention
of the grant of the patent:
**19.05.2004 Bulletin 2004/21**

(51) Int Cl.7: **F16L 11/08**, D03D 15/00

(21) Application number: **01915207.3**

(86) International application number:
**PCT/EP2001/001362**

(22) Date of filing: **08.02.2001**

(87) International publication number:
**WO 2001/059349 (16.08.2001 Gazette 2001/33)**

(54) **HOSE AND PIPE REINFORCEMENT**

SCHLAUCH- UND ROHRVERSTÄRKUNG

RENFORCEMENT DE TUYAU ET DE TUYAUTERIE

(84) Designated Contracting States:
**AT BE CH CY DE DK ES FI FR GB GR IE IT LI LU
MC NL PT SE TR**

(30) Priority: **08.02.2000 GB 0002739**

(43) Date of publication of application:
**06.11.2002 Bulletin 2002/45**

(73) Proprietor: **MILLIKEN EUROPE N.V.
B-9000 Gent (BE)**

(72) Inventors:
• **DE MEYER, Willy
B-9031 Drongen (BE)**

• **FAKET, Mark
deceased (BE)**

(74) Representative: **HOFFMANN - EITLE
Patent- und Rechtsanwälte
Arabellastrasse 4
81925 München (DE)**

(56) References cited:
**GB-A- 2 199 629        GB-A- 2 335 251
US-A- 4 983 433**

## Description

The present invention relates to the reinforcement of polymer and rubber products such as flexible hoses for pneumatic and hydraulic applications. It will be appreciated, however, that the invention is also applicable to the reinforcement of relatively rigid pipes formed from polymer material. The present invention in particular relates to the use of a special fabric for reinforcing hoses and pipes.

Rubber products such as vehicle tyres and hydraulic hoses are known to be reinforced with what is called "tyre cord". Tyre cord generally comprises a plurality of parallel textile cords or "ends" which are embedded in sheet rubber in a calendering process to create a reinforcement product which is then suitable for application to a tyre or hose pre-form. The embedding of the cords in the rubber sheet is necessary to place the cords in a stable and robust form and to facilitate their subsequent handling.

The calendering process itself is a relatively labour-intensive and energy-intensive operation and typically results in waste of both the cords and the rubber sheeting. In particular, there are usually material losses at the edges and at either end of each calendering production run. Accordingly, it would be highly desirable to provide a new, substitute reinforcement product and method which does not require the traditional calendering operation. The present invention aims to provide just such a product and method.

GB-2 335 251 discloses a spoolable composite tube comprising a substantially fluid impervious inner liner formed from polymeric or metallic material, and a first composite layer 14 enclosing said liner and formed of fiber and matrix, said first composite layer having first 20, second 16 and third 18 fibers extending helically, wherein the second fiber extends clockwise and the third fiber extends counter clockwise, such that said first fiber is interwoven with at least one of said second fiber and said third fiber.

According to one aspect the present invention provides a reinforcement fabric for use in manufacture of hoses and pipes having a body matrix of polymer material, said reinforcement fabric comprising a collection of substantially parallel reinforcement yarns arranged along a longitudinal direction of the fabric and a plurality of transverse and/or bias yarns interconnecting the reinforcement yarns. The reinforcement fabric is a stable fabric for direct application to the polymer body matrix of a preform of the hose or pipe by wrapping the reinforcement fabric around the preform. The reinforcement fabric is adapted to be directly applied to the polymer body matrix of the preform by the transverse and/or bias yarns being substantially lighter than the reinforcement yarns, and by at least one surface of the reinforcement fabric being tackified for adhesion to the polymer body matrix of the preform of the hose or pipe. The term "adhesion" as used herein does not mean that a particularly strong bond between the polymer body matrix of the pre-form and the reinforcement fabric is to be achieved, instead the term "adhesion" is used to denote a certain amount of stickiness that is needed to hold the reinforcement fabric in place on the preform of the hose or pipe during subsequent manufacturing operations.

In addition to tackifying the at least one surface of the reinforcement fabric a chemical finish may be applied to the longitudinal reinforcement yarns or the entire reinforcement fabric to ensure a strong bond of the reinforcement yarns to the polymer body matrix of the hose or pipe after full manufacture of the hose or pipe. The chemical finish can be applied before or simultaneously to the tackifying operation.

The reinforcement yarns of the invention are typically arranged as warp in the fabric while the interconnecting yarns are typically arranged as transverse weft, and/or as bias yarns which extend at an angle to the warp. The reinforcement yarns are typically relatively heavy cords, while the interconnecting yarns are substantially lighter, and may be as light as simple threads. In the context of the present invention, "lighter" means that there is much less weight in the transverse and/or bias yarns than the longitudinal reinforcement yarns. This typically results in the transverse and/or bias yarns having a considerably lesser tensile strenght than the reinforcement yarns.

The reinforcement yarns or cords may be any of a variety of natural and synthetic yarns or monofilament, and are preferably formed from any one or more of nylon, polyester, polyethylene, polypropylene, aramid, PVA, rayon, cotton, carbon, metal or glass. The composition of the weft and/or bias yarns is not critical and practically any type capable of holding the reinforcing cord securely in the fabric will suffice. Furthermore, in contrast to the traditional tyre cord, the reinforcement yarns in the fabric of the invention are preferably low twist yarns. These provide lower elasticity and consequently exhibit less elongation in pressurised hose applications.

The reinforcement fabric may be tackified at just one surface, but is more preferably tackified at both. For example, the entire fabric may have been impregnated with a tackifying substance. In this context, and as known in the art, a tackified surface is a surface that will stick to another surface by a light pressure. In a particular preferred form of the invention the yarns of the reinforcement fabric are tackified by application of a coating which enhances the overall stability of the fabric and/or promotes adhesion of the fabric to the polymer matrix of the hose or pipe pre-form upon formation/building of the hose or pipe pre-form. The coating substance itself is preferably a liquid equivalent to or compatible to the polymer of the hose. The coating operation of the fabric may be performed by means of dipping or spraying the complete fabric. Alternatively, the reinforcing yarns may themselves have been individually treated or coated before their incorporation in the reinforcing fabric.

The reinforcement fabric may be formed according to a variety of known fabric constructions, including woven, knitted, laid, braided, stitched, sewed and non-woven constructions. In a preferred embodiment of the invention the fabric has woven or knitted weft yarns/threads. The fabric may possibly also include weft insertion. In another particularly preferred embodiment, the reinforcement fabric has a laid construction, with the yarns collectively treated so that they bond together in the fabric. This treatment of the yarns may also be a coating operation. Most preferably, the coating of the laid yarns serves to both bond the laid yarns into a relatively robust laid fabric construction and to also render the fabric tacky, i.e. suitably adhesive to the polymer matrix of the hose pre-form for its direct application thereto.

The reinforcement fabric of the invention is, due to its novel construction, inherently stable and thus allows to slit the fabric into tape form. Accordingly, the reinforcement fabric of the invention is preferably provided slit into reels of fabric strip or tape, with the reinforcement yarns or cords extending longitudinally of the strip. In use, the fabric strip of the invention is wrapped directly around a polymer matrix pre-form of a hose in a substantially circumferential direction. However, the fabric strip may be wrapped at a slight angle to the circumferential direction so that the strip traverses a length of the hose or pipe in a helical fashion. The tackifying helps to maintain the integrity of the fabric strips after slitting the reinforcement fabric.

According to another aspect the invention provides a method of producing a stable reinforcement fabric to be wrapped directly around a polymer body matrix of a hose or pipe pre-form, the method comprising the steps of:

- arranging a plurality of reinforcement yarns substantially side by side as warp of the fabric,
- arranging a plurality of weft and/or bias yarns that are substantially lighter than the reinforcement yarns to interconnect said plurality of reinforcement yarns with said plurality of weft and/or bias yarns, and
- tackifying at least one surface of the reinforcement fabric such that the reinforcement fabric sticks to the polymer body matrix of the preform of the hose or pipe.

According to a further aspect, the present invention provides a method of reinforcing a hose or pipe formed from polymer material, comprising the steps of:

- providing an elongate strip of reinforcement fabric according to the invention as described above;
- providing a pre-form of said hose or pipe, comprising a matrix of said polymer material; and
- applying the reinforcement fabric directly to the polymer matrix of the pre-form by wrapping the elongate fabric strip in a substantially circumferential direction around the pre-form.

The width of the strip of reinforcing fabric will generally depend on the pre-form diameter at which the fabric is applied. For example, the width (w) of the strip preferably lies within the range of $0,50\pi d$ and $0,90\pi d$, but is most preferably calculated according to the formula:

$$w = 0.705 \ \pi \ d$$

where w = strip width, and
d = diameter of reinforcement.

According to yet another aspect, the present invention also provides a hose or a pipe formed according to the above method.

For a better understanding of the present invention, a preferred embodiment is hereafter described by way of example. This example may be read with reference to the preceding description, but it is in no way intended to limit the generality of that description.

In one exemplary embodiment of the invention a fabric is provided for the reinforcement of a flexible rubber hose for use in an hydraulic circuit; i.e. a flexible rubber hose to be subjected to substantial internal pressures. The reinforcement fabric is essentially oriented in one direction - the lengthwise or warp direction. The second or weft direction is present merely to keep the main direction together in a regular way. Accordingly, the fabric comprises a plurality of textile reinforcement yarns or cords (e.g. nylon) arranged substantially parallel and relatively densely in the warp of the fabric. A plurality of weft yarns are knitted with the warp reinforcement cord to form the fabric. The second set of yarns (the weft yarns), however, are an order of magnitude lighter than the warp cords and may be significantly more sparsely arranged.

The fabric is adapted to be directly applied to the rubber matrix of the hose. In this regard, the fabric is tackified, to both enhance the independent stability of the fabric and.to promote its adhesion to the rubber material when building the hose or pipe. To achieve the tackifying, the fabric may be coated with a liquid substance, for example by dipping or spraying. The coating substance is compatible with the rubber material of the hose. The fabric is slit into elongate strips with the reinforcement warp cords extending longitudinally of the strips.

In fabricating the hose, a first hose pre-form is extruded and the strip of reinforcement fabric is then applied directly to the rubber matrix of the pre-form. The fabric strip is wrapped directly around the pre-form in a substantially circumferential direction, although preferably at a slight angle so that the wrapped reinforcement fabric gradually traverses the length of the hose. The width of the fabric strip is preferably calculated according to the formula: w = 0,705 π d, where w is the strip width and d is the diameter of the reinforcement. Further rubber material is then typically extruded over the wrapped reinforcement fabric.

One of the most significant benefits of the present invention is that it enables the previously necessary calendering operation in which tyre cord is embedded in a sheet of rubber to be eliminated. Accordingly, pre-slit reinforcement fabric, which is able to be directly applied to the polymer matrix of a hose can be supplied directly to the hose manufacturers. Furthermore, the present invention is able to provide a more stable and more regular product than before which is tailored to requirements of hose manufacturers.

## Claims

1. A reinforcement fabric for use in manufacture of reinforced hoses or reinforced pipes having a body matrix of polymer material, said reinforcement fabric comprising a collection of substantially parallel reinforcement yarns arranged along a longitudinal direction of the fabric and a plurality of transverse and/or bias yarns interconnecting the reinforcement yarns, and said reinforcement fabric being a stable fabric for direct application to the polymer body matrix of a preform of the hose or pipe by wrapping the reinforcement fabric around the preform, wherein the reinforcement fabric is adapted to be directly applied to the polymer body matrix of the preform by

   - the transverse and/or bias yarns being substantially lighter than the reinforcement yarns, and by
   - at least one surface of the reinforcement fabric being tackified to stick to the polymer body matrix of the preform of the hose or pipe.

2. A reinforcement fabric as claimed in claim 1 wherein the tensile strength of the transverse and/or bias yarns is substantially less than the tensile strength of the reinforcement yarns.

3. A reinforcement fabric as claimed in claim 1 or claim 2 wherein the tackiness provides for integrating the reinforcement yarns and the transverse and/or bias yarns into a stable fabric.

4. A reinforcement fabric as claimed in any of claims 1 to 3 wherein the tackiness is provided by means of a coating of the yarns.

5. A reinforcement fabric as claimed in any of claims 1 to 4 wherein the fabric is in the form of an elongate strip and wherein the reinforcement yarns extend longitudinally of the strip.

6. A reinforcement fabric as claimed in claim 5 wherein the fabric strip is provided wound on a reel or spool.

7. A reinforcement fabric as claimed in any of the preceding claims wherein the reinforcement yarns comprise any one or more of nylon, polyester, polyethylene, polypropylene, rayon, aramid, PVA, carbon, glass or metal, or other material in yarn form or as monofilament.

8. A reinforcement fabric as claimed in any one of the preceding claims wherein the fabric has a knitted, woven, non-woven, laid, braided stitched or sewed construction.

9. A method of producing a stable reinforcement fabric to be wrapped directly around a polymer body matrix of a hose or pipe pre-form, the method comprising the steps of:

   - arranging a plurality of reinforcement yarns substantially side by side as warp of the fabric,
   - arranging a plurality of weft and/or bias yarns that are substantially lighter than the reinforcement yarns to interconnect said plurality of reinforcement yarns with said plurality of weft and/or bias yarns, and
   - tackifying at least one surface of the reinforcement fabric such that the reinforcement fabric sticks to the polymer body matrix of the preform of the hose or pipe.

10. A method as claimed in claim 9 wherein the tackifying step involves coating the reinforcement yarns and/or the weft and/or bias yarns before, after or during fabric formation.

11. A method as claimed in claim 9 or 10 wherein the tackifying step involves either one or both of spraying said yarns with a substance in liquid form or dipping said yarns in a bath of said substance.

12. A method as claimed in any one of claims 9 to 11 wherein the yarns are already interconnected, for example by knitting, stitching, sewing or weaving, before the tackifying step.

13. A method as claimed in any one of claims 9 to 11 wherein the step of tackifying the yarns also serves to bond them together within a laid fabric construction.

**14.** A method as claimed in any one of claims 9 to 13 further including the step of:

- slitting the fabric into an elongate strip such that said reinforcement yarns or cords extend longitudinally of said strip, and
- winding said strip onto a reel or spool.

**15.** A method as claimed in claim 14 wherein the strip has a width in the range of 0,50πd to 0,9πd, and preferably 0,705πd, where d is a reinforcement diameter of the hose or pipe.

**16.** A method of reinforcing a hose or pipe formed from polymer material comprising the steps of:

- providing an elongate strip of reinforcement fabric according to any one of claims 1 to 8;
- forming a pre-form of said hose or pipe comprising a matrix of said polymer material; and
- applying the reinforcement fabric directly to the polymer matrix of the hose or pipe pre-form by wrapping the fabric strip in a substantially circumferential direction around the pre-form.

**Patentansprüche**

**1.** Verstärkungstextil zur Verwendung bei der Herstellung von verstärkten Schläuchen oder verstärkten Rohren mit einer Aufbaumatrix aus einem Polymermaterial, wobei das Verstärkungstextil eine Ansammlung von im wesentlichen parallelen Verstärkungsgarnen, die entlang der Längsrichtung des Textils angeordnet sind, und eine Vielzahl von transversalen und/oder schräg verlaufenden Garnen, die die Verstärkungsgarne miteinander verbinden, umfasst, und wobei das Verstärkungstextil ein stabiles Textil für die direkte Anwendung auf die Polymeraufbaumatrix einer Vorform des Schlauches oder des Rohres durch Wickeln des Verstärkungstextils um die Vorform ist, wobei das Verstärkungstextil an das direkte Auftragen auf die Polymeraufbaumatrix der Vorform dadurch angepasst ist, dass

- die transversalen und/oder schräg verlaufenden Garne im wesentlichen leichter sind als die Verstärkungsgarne, und dass

- mindestens eine Oberfläche des Verstärkungstextils klebrig ist, um an die Polymeraufbaumatrix der Vorform des Schlauches oder des Rohres zu kleben.

**2.** Verstärkungstextil gemäss Anspruch 1, wobei die Zugfestigkeit der transversalen und/oder schräg verlaufenden Garne im wesentlichen geringer ist als die Zugfestigkeit der Verstärkungsgarne.

**3.** Verstärkungstextil gemäss Anspruch 1 oder Anspruch 2, wobei die Klebrigkeit die Einarbeitung der verstärkungsgarne und der transversalen und/oder schräg verlaufenden Garne in ein stabiles Textil gewährleistet.

**4.** Verstärkungstextil gemäss einem der Ansprüche 1 bis 3, wobei die Klebrigkeit mittels einer Beschichtung der Garne bereitgestellt wird.

**5.** Verstärkungstextil gemäss einem der Ansprüche 1 bis 4, wobei das Textil in Form eines länglichen Streifens vorliegt und die Verstärkungsgarne sich in Längsrichtung des Streifens erstrecken.

**6.** Verstärkungstextil gemäss Anspruch 5, wobei der Textilstreifen aufgewickelt auf eine Haspel oder eine Spule vorliegt.

**7.** Verstärkungstextil gemäss einem der vorhergehenden Ansprüche, wobei die Verstärkungsgarne eines oder mehrere aus Nylon, Polyester, Polyethylen, Polypropylen, Rayon, Aramid, PVA, Kohlenstoff, Glas oder Metall oder anderen Materialien in Garnform oder als Monofilament umfassen.

**8.** Verstärkungstextil gemäss einem der vorhergehenden Ansprüche, wobei das Textil eine gewirkte, gewebte, Vlies-, gelegte, geflochtene, gesteppte oder genähte Konstruktion aufweist.

**9.** Verfahren zur Herstellung eines stabilen Verstärkungstextils, das direkt um eine Polymeraufbaumatrix einer Schlauch- oder Rohrvorform gewickelt wird, wobei das Verfahren die Schritte umfasst:

• Anordnen einer Vielzahl von Verstärkungsgarnen im wesentlichen Seite an Seite als Kettgarn des Textils,

• Anordnen einer Vielzahl von Schussund/oder schräg verlaufenden Garnen, die im wesentlichen leichter sind als die Verstärkungsgarne, um die Vielzahl von Verstärkungsgarnen mit der Vielzahl von Schuss- und/oder schräg verlaufenden Garnen zu verbinden,

• Klebrigmachen mindestens einer Oberfläche des Verstärkungstextils, so dass das Verstärkungstextil an der Polymeraufbaumatrix der Vorform des Schlauches oder des Rohres klebt.

**10.** Verfahren gemäss Anspruch 9, wobei der Klebrigmachschritt das Beschichten der Verstärkungsgarne und/oder der Schuss- und/oder schräg verlaufenden Garne vor, nach oder während der Textilbildung umfasst.

**11.** Verfahren gemäss Anspruch 9 oder 10, wobei der Klebrigmachschritt das Besprühen der Garne mit einer Substanz in flüssiger Form und/oder das Eintauchen der Garne in ein Bad dieser Substanz umfasst.

**12.** Verfahren gemäss einem der Ansprüche 9 bis 11, wobei die Garne schon vor dem Klebrigmachschritt z.B. durch Wirken, Steppen, Nähen oder Weben miteinander verbunden werden.

**13.** Verfahren gemäss einem der Ansprüche 9 bis 11, wobei der Klebrigmachschritt der Garne auch dazu dient, diese innerhalb einer gelegten Textilkonstruktion miteinander zu verbinden.

**14.** Verfahren gemäss einem der Ansprüche 9 bis 13, weiterhin umfassend die Schritte:

- Schlitzen des Textils in längliche Streifen, so dass die Verstärkungsgarne oder -schnüre sich in Längsrichtung des Streifens erstrecken, und

- Aufwickeln des Streifens auf eine Haspel oder Spule.

**15.** Verfahren gemäss Anspruch 14, wobei der Streifen eine Breite im Bereich von 0,50 bis 0,9 πd, und bevorzugt 0,705 πd, aufweist, wobei d der Verstärkungsdurchmesser des Schlauches oder des Rohres ist.

**16.** Verfahren zum Verstärken eines Schlauches oder eines Rohres aus einem Polymermaterial, umfassend die Schritte:

- Bereitstellen eines länglichen Streifens eines Verstärkungstextils gemäss einem der Ansprüche 1 bis 8,

- Bilden einer Vorform des Schlauches oder des Rohres, umfassend eine Matrix des Polymermaterials, und

- Auftragen des Verstärkungstextils direkt auf die Polymermatrix der Schlauch- oder Rohrvorform durch Wickeln des Textilstreifens in im wesentlichen Umfangsrichtung um die Vorform.

**Revendications**

**1.** Tissu de renfort destiné à être utilisé dans la fabrication de tuyaux renforcés ou de tubes renforcés comportant une matrice formant corps constituée d'un matériau polymère, ledit tissu de renfort comprenant un ensemble de fils de renfort essentiellement parallèles disposés dans une direction longitudinale du tissu et une pluralité de fils transversaux et/ou fils en biais reliant les fils de renfort, et ledit tissu de renfort étant un tissu stable destiné à être appliqué directement sur la matrice formée du corps polymère d'une préforme du tuyau ou du tube par enroulement du tissu de renfort autour de la préforme, le tissu de renfort étant adapté pour être appliqué directement à la matrice formant corps polymère de la préforme par le fait que

- les fils transversaux et/ou fils en biais sont nettement plus légers que les fils de renfort, et en ce que

- au moins une surface du tissu de renfort est rendue collante pour être collée sur la matrice formée d'un corps polymère de la préforme du tuyau ou du tube.

**2.** Tissu de renfort selon la revendication 1, dans lequel la résistance à la traction des fils transversaux et/ou des fils en biais est nettement inférieure à la résistance à la traction des fils de renfort.

**3.** Tissu de renfort selon la revendication 1 ou la revendication 2, dans lequel le caractère collant permet l'intégration des fils de renfort et des fils transversaux et/ou des fils en biais dans un tissu stable.

**4.** Tissu de renfort selon l'une quelconque des revendications 1 à 3, dans lequel le caractère collant est fourni au moyen d'un revêtement des fils.

**5.** Tissu de renfort selon l'une quelconque des revendications 1 à 4, dans lequel le tissu se présente sous la forme d'une bande allongée et dans lequel les fils de renfort s'étendent longitudinalement dans la direction longitudinale de la bande.

**6.** Tissu de renfort selon la revendication 5, dans lequel la bande de tissu est disposée à l'état enroulé sur une bobine ou un mandrin.

**7.** Tissu de renfort selon l'une quelconque des revendications précédentes, dans lequel les fils de renfort comprennent l'un quelconque ou plusieurs de: nylon, polyester, polyéthylène, polypropylène, rayon, aramide, PVA, carbone, verre ou métal, ou un autre matériau sous la forme d'un fil ou sous la forme d'un monofilament.

**8.** Tissu de renfort selon l'une quelconque des revendications précédentes, dans lequel ledit tissu possède une structure tricotée, tissée, non tissée, tramée, tressée et piquée ou cousue.

**9.** Procédé pour fabriquer un tissu de renfort stable devant être enroulé directement autour d'une matrice formée d'un corps polymères d'une préforme de tuyau ou de tube, le procédé comprenant les étapes consistant à:

- disposer une pluralité de fils de renfort essentiellement côte-à-côte sous la forme d'une chaîne du tissu,
- disposer une pluralité de fils de chaîne et/ou fils en biais, qui sont nettement plus légers que les fils de renfort pour raccorder ladite pluralité de fils de renfort à ladite pluralité de fils de trame et/ou de fils en biais, et
- rendre collante au moins une surface du tissu de renfort de telle sorte que le tissu de renfort colle à la matrice formée du corps polymère de la préforme du tuyau ou du tube.

10. Procédé selon la revendication 9, selon lequel l'étape d'obtention d'une caractéristique collante implique le revêtement des fils de renfort et/ou des fils de trame et/ou des fils en biais, avant, après ou pendant la formation du tissu.

11. Procédé selon la revendication 9 ou 10, selon lequel l'étape d'obtention d'une caractéristique collante implique de projeter sur lesdits fils une substance sous forme liquide ou d'immerger lesdits fils dans un bain de ladite substance ou ces deux opérations.

12. Procédé selon l'une quelconque des revendications 9 à 11, selon lequel les fils sont déjà raccordés entre eux, par exemple par tricotage, piqûre, couture ou tissage, avant l'étape d'obtention d'une caractéristique collante.

13. Procédé selon l'une quelconque des revendications 9 à 11, selon lequel l'étape d'obtention de la caractéristique collante pour rendre collants les fils sert également à les relier entre eux dans une structure de tissu tramé.

14. Procédé selon l'une quelconque des revendications 9 à 13, comprenant en outre les étapes consistant à:

- refendre le tissu sous la forme d'une bande allongée de telle sorte que lesdits fils ou cordons de renfort s'étendent dans la direction longitudinale de ladite bande, et
- enrouler ladite bande sur un rouleau ou un mandrin.

15. Procédé selon la revendication 14, selon lequel la bande possède une largeur dans la gamme allant de 0,50 d et 0,9 d et de préférence égale à 0,705 d, d étant un diamètre de renfort du tuyau ou du tube.

16. Procédé de renfort d'un tuyau ou d'un tube formé d'un matériau polymère comprenant les étapes consistant à:

- prévoir une bande allongée d'un tissu de renfort selon l'une quelconque des revendications 1 à 8;
- former une préforme dudit tuyau ou dudit tube comprenant une matrice dudit matériau polymère; et
- appliquer le tissu de renfort directement à la matrice polymère de la préforme du tuyau ou du tube en enroulant la bande de tissu dans une direction essentiellement circonférentielle autour de la préforme.